# EUROPEAN PATENT APPLICATION

(11) **EP 3 499 502 A1**
(43) Date of publication of application: **19.06.2019**
(21) Application number: 17840737.5
(22) Date of filing: 21.03.2017
(51) Int. Cl.: G10L 15/02, G10L 19/02, G10L 21/049

(54) **VOICE INFORMATION PROCESSING METHOD AND APPARATUS**

(30) Priority: 15.08.2016 CN 201610674393
(71) Applicant: ZTE Corporation, Shenzhen, Guangdong 518057 (CN)
(72) Inventor: WEI, Xing, Shenzhen Guangdong 518057 (CN)
(74) Representative: Petraz, Gilberto Luigi
(86) International application number: PCT/CN2017/077537
(87) International publication number: WO 2018/032760

(57) **Abstract**

A voice information processing method is disclosed. The method includes: acquiring first voice information; analyzing and processing the first voice information, to obtain first feature information and second feature information of the first voice information; and determining, based on the first feature information and the second feature information of the first voice information, relations between the first voice information and preset voice information, and determining, based on a determination result, whether to execute an operation corresponding to the first voice information. Disclosed also is a voice information processing device.

## Description

### FIELD OF THE INVENTION

The present disclosure relates to voice processing technologies in the technical field of communications, and in particular, to a voice information processing method and a voice information processing device.

### BACKGROUND OF THE INVENTION

With the rapid development of internet technologies, wireless network has found a wide range of applications in various industries, followed by the emergence of voice services. Due to the convenience of voice interactive experience, voice technologies are widely used in various ways of human life such as work, entertainments, and exercise. For example, Google integrated a new type of voice dictation tool into its Google Docs application, making it possible for users to interact with computers by relying no longer on traditional keyboard input; Microsoft and Apple also integrated voice products Cortana and Siri of their own handheld terminal devices onto their respective computer systems; and even some smart phones or wearable devices can interact with a terminal device by using voice technologies. Existing voice recognition technologies mainly refer to translating the language information contained in the voice information of the user into a text by a system deployed locally or on the cloud, comparing the text against a corresponding text in sample data, and simultaneously comparing resonant frequencies of two voices, so that different users can be recognized.

However, the existing voice recognition technologies only experientially authenticate some "physical features" of a user's voice, and fail to take into consideration of the user's voice frequency variation resulted from factors such as speaking habit, emotional state, etc. This may lead to a large difference between a frequency of the real voice and that of the sampled voice of the user, rendering it difficult to accurately identify a target user. In this case, there might be situations where some users operate beyond their real operation authorization, resulting in bad user experience.

### SUMMARY OF THE INVENTION

In order to solve the above technical problem, embodiments of the present disclosure provide a voice information processing method and a voice information processing device, which at least partially solves the problem of the incapability of the existing technologies to accurately recognize a target user based on voice information.

To achieve the aforesaid objective, technical solutions of embodiments of the present disclosure are implemented in the following ways.

A voice information processing method is provided. The method includes steps of:
acquiring first voice information;
analyzing and processing the first voice information, to obtain first feature information and second feature information of the first voice information; and
determining, based on the first feature information and the second feature information of the first voice information, relations between the first voice information and preset voice information, and determining, based on a determination result, whether to execute an operation corresponding to the first voice information.

Alternatively, before the step of analyzing and processing the first voice information to obtain the first feature information and the second feature information of the first voice information, the method further includes:
acquiring a first time-domain waveform corresponding to the first voice information;
determining whether the first time-domain waveform of the first voice information is continuous;
analyzing and processing the first voice information if the first time-domain waveform of the first voice information is continuous, to obtain the first feature information and the second feature information of the first voice information; and
reacquiring the first voice information if the first time-domain waveform of the first voice information is discontinuous.

Alternatively, the step of analyzing and processing the first voice information to obtain the first feature information and the second feature information of the first voice information includes:
performing spectrum analysis on a first time-domain waveform of the first voice information, to obtain a frequency-domain waveform of the first voice information;
acquiring the first feature information of the first voice information based on the frequency-domain waveform of the first voice information;
filtering the first time-domain waveform of the first voice information and processing a filtered first time-domain waveform of the first voice information using a time-delay compensation mechanism, to obtain a second time-domain waveform of the first voice information; and
acquiring the second feature information of the first voice information based on the second time-domain waveform of the first voice information.

Alternatively, the step of determining, based on the first feature information and the second feature information of the first voice information, the relations between the first voice information and the preset voice information, and determining, based on the determination result, whether to execute the operation corresponding to the first voice information, includes:
analyzing relations between the first feature information of the first voice information and first feature information of the preset voice information, to obtain a first feature coefficient of the first voice information;
analyzing relations between the second feature information of the first voice information and second feature information of the preset voice information, to obtain a second feature coefficient of the first voice information;
determining whether the first feature coefficient is smaller than a first threshold value and whether the second feature coefficient is smaller than a second threshold value; and
determining that the first voice information matches the preset voice information and executing the operation corresponding to the first voice information, if the first feature coefficient is smaller than the first threshold value and the second feature coefficient is smaller than the second threshold value.

Alternatively, the step of determining that the first voice information matches the preset voice information and executing the operation corresponding to the first voice information, if the first feature coefficient is smaller than the first threshold value and the second feature coefficient is smaller than the second threshold value, includes:
determining that the first voice information matches the preset voice information and acquiring a preset operation authorization corresponding to the preset voice information, if the first feature coefficient is smaller than the first threshold value and the second feature coefficient is smaller than the second threshold value;
identifying the first voice information, to acquire a first operation corresponding to the first voice information; and
determining whether the first operation is within the preset operation authorization, and executing the first operation if the first operation is within the preset operation authorization.

Alternatively, the method further includes steps of:
performing spectrum analysis on a first time-domain waveform of the first voice information, to obtain a frequency of the first voice information;
determining whether the frequency of the first voice information is within a preset frequency scope; and
setting a user operation authorization corresponding to the first voice information, if the frequency of the first voice information is within the preset frequency scope.

A voice information processing device is provided. The device includes: a first acquiring unit, a second acquiring unit, and a first processing unit, wherein:
the first acquiring unit is configured to acquire first voice information;
the second acquiring unit is configured to analyze and process the first voice information, to obtain first feature information and second feature information of the first voice information; and
the first processing unit is configured to determine, based on the first feature information and the second feature information of the first voice information, relations between the first voice information and preset voice information, and determine, based on a determination result, whether to execute an operation corresponding to the first voice information.

Alternatively, the device further includes: a third acquiring unit, a first determining unit, and a second processing unit, wherein:
the third acquiring unit is configured to acquire a first time-domain waveform corresponding to the first voice information;
the first determining unit is configured to determine whether the first time-domain waveform of the first voice information is continuous;
the second processing unit is configured to analyze and process the first voice information if the first time-domain waveform of the first voice information is continuous, to obtain the first feature information and the second feature information of the first voice information; and
the second processing unit is further configured to reacquire the first voice information if the first time-domain waveform of the first voice information is discontinuous.

Alternatively, the second acquiring unit includes: a first acquiring module and a second acquiring module, wherein:
the first acquiring module is configured to perform spectrum analysis on a first time-domain waveform of the first voice information, to acquire a frequency-domain waveform of the first voice information;
the first acquiring module is further configured to acquire the first feature information of the first voice information based on the frequency-domain waveform of the first voice information;
the second acquiring module is configured to filter the first time-domain waveform of the first voice information and process a filtered first time-domain waveform of the first voice information using a time-delay compensation mechanism, to obtain a second time-domain waveform of the first voice information; and
the second acquiring module is further configured to acquire the second feature information of the first voice information based on the second time-domain waveform of the first voice information.

Alternatively, the first processing unit includes: a third acquiring module, a determining module, and a processing module, wherein:
the third acquiring module is configured to analyze relations between the first feature information of the first voice information and first feature information of the preset voice information, to obtain a first feature coefficient of the first voice information;
the third acquiring module is further configured to analyze relations between the second feature information of the first voice information and second feature information of the preset voice information, to obtain a second feature coefficient of the first voice information;
the determining module is configured to determine whether the first feature coefficient is smaller than a first threshold value and whether the second feature coefficient is smaller than a second threshold value; and
the processing module is configured to determine that the first voice information matches the preset voice information and execute the operation corresponding to the first voice information, if the first feature coefficient is smaller than the first threshold value and the second feature coefficient is smaller than the second threshold value.

Alternatively, the processing module is further configured to:
determine that the first voice information matches the preset voice information and acquire a preset operation authorization corresponding to the preset voice information, if the first feature coefficient is smaller than the first threshold value and the second feature coefficient is smaller than the second threshold value;
identify the first voice information, to acquire a first operation corresponding to the first voice information; and
determine whether the first operation is within the preset operation authorization, and execute the first operation if the first operation is within the preset operation authorization.

Alternatively, the device further includes: a fourth acquiring unit, a second determining unit, and a setting unit, wherein:
the fourth acquiring unit is configured to perform spectrum analysis on a first time-domain waveform of the first voice information, to obtain a frequency of the first voice information;
the second determining unit is configured to determine whether the frequency of the first voice information is within a preset frequency scope; and
the setting unit is configured to set a user operation authorization corresponding to the first voice information, if the frequency of the first voice information is within the preset frequency scope.

The voice information processing method and device provided by the embodiments of the present disclosure are capable of acquiring the first voice information, then analyzing and processing the first voice information to obtain the first feature information and the second feature information of the first voice information, determining the relations between the first voice information and the preset voice information based on the first feature information and the second feature information of the first voice information, and finally determining, based on the determination result, whether to execute the operation corresponding to the first voice information. By way of this, during the process of recognizing a user's voice information, both the first feature information and the second feature information of the user's voice information can be used to recognize the relations between the user's voice information and the preset voice information. This solves the problem of the incapability of the existing technologies to accurately recognize a target user. Target users can thus be accurately identified and be precisely matched with operation authorizations, which help to avoid situations where some users operate beyond their real operation authorization. Interaction between users and the apparatus is thus improved.

### BRIEF DESCRIPTION OF THE DRAWINGS

Fig. 1 schematically shows a flowchart of a voice information processing method provided by an embodiment of the present disclosure;
Fig. 2 schematically shows a flowchart of another voice information processing method provided by an embodiment of the present disclosure;
Fig. 3 schematically shows a flowchart of further another voice information processing method provided by an embodiment of the present disclosure;
Fig. 4 schematically shows a flowchart of again another voice information processing method provided by an embodiment of the present disclosure;
Fig. 5 schematically shows structure of a voice information processing device provided by an embodiment of the present disclosure;
Fig. 6 schematically shows structure of another voice information processing device provided by an embodiment of the present disclosure;
Fig. 7 schematically shows structure of further another voice information processing device provided by an embodiment of the present disclosure;
Fig. 8 schematically shows structure of a voice information processing device provided by another embodiment of the present disclosure; and
Fig. 9 schematically shows structure of another voice information processing device provided by another embodiment of the present disclosure.

### DETAILED DESCRIPTION OF THE EMBODIMENTS

Technical solutions in embodiments of the present disclosure will be explained clearly and completely with reference to the accompanying drawings of the embodiments.

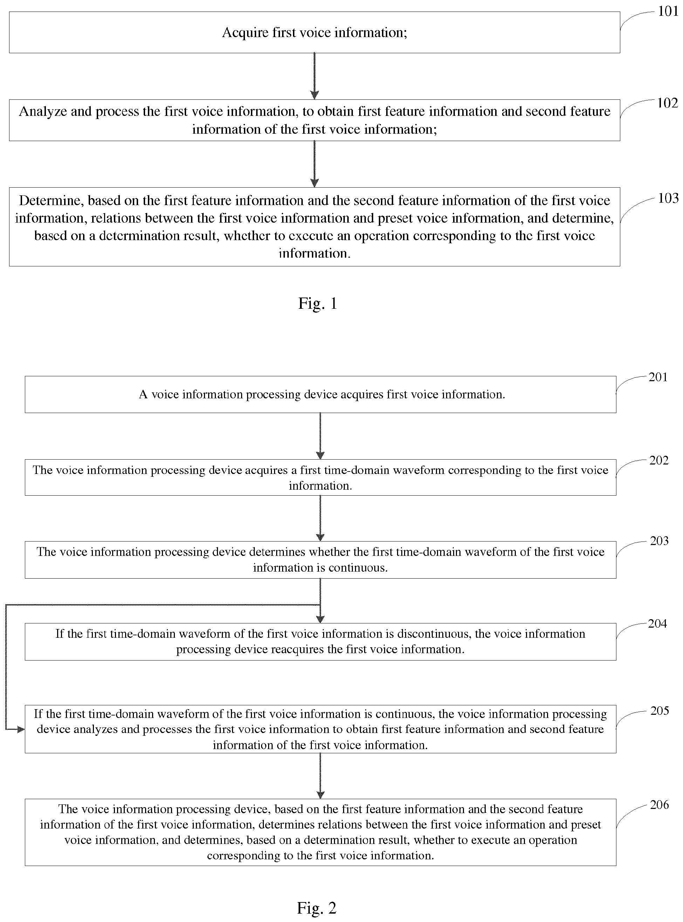

An embodiment of the present disclosure provides a voice information processing method. Referring to Fig. 1, the method includes the following steps 101 to 103.

At step 101, first voice information is acquired.

Specifically, step 101 of acquiring the first voice information can be implemented by a voice information processing device. The voice information processing device may be a smart apparatus such as a smart phone, a navigator, a tablet computer, a smart television, a smart refrigerator, a smart relay, an air-conditioner, etc., that is capable of conducting voice recognition and executing a corresponding operation. The first voice information may be real-time voice information sent by a user and capable of controlling the smart apparatus to execute relevant operations. The first voice information may be collected from a time when the user starts to speak to a time after the user stops speaking for a time period, and this time period can be set by the user at his own desire. For example, the user can set the time period as 5 seconds.

At step 102, the first voice information is analyzed and processed to obtain first feature information and second feature information of the first voice information.

Specifically, step 102 of analyzing and processing the first voice information to obtain the first feature information and the second feature information may be implemented by the voice information processing device. The first feature information may include physical features of voice, such as timbre, resonance, harmonic mode, etc., and the second feature information may include behavior features of the voice, such as volume, speaking speed, etc.

At step 103, relations between the first voice information and preset voice information are determined based on the first feature information and the second feature information of the first voice information; and, it is determined, based on a determination result, whether to execute an operation corresponding to the first voice information.

Specifically, step 103 of determining relations between the first voice information and the preset voice information based on the first feature information and the second feature information of the first voice information, and determining, based on a determination result, whether to execute an operation corresponding to the first voice information, may be implemented by the voice information processing device. The first feature information of the first voice information is compared against first feature information of the preset voice information, and meanwhile the second feature information of the first voice information is compared against second feature information of the preset voice information, so as to determine whether the first voice information matches the preset voice information. If the first voice information matches the preset voice information, the operation corresponding to the first voice information is executed. If the first voice information does not match the preset voice information, the operation corresponding to the first voice information is not executed, and a corresponding reminder voice (for example, "you are not authorized for this operation") is issued.

The voice information processing method provided by the present embodiment is capable of acquiring the first voice information, then analyzing and processing the first voice information to obtain the first feature information and the second feature information of the first voice information, determining the relations between the first voice information and the preset voice information based on the first feature information and the second feature information of the first voice information, and finally determining, based on a determination result, whether to execute the operation corresponding to the first voice information. By way of this, in the process of recognizing a user's voice information, both the first feature information and the second feature information of the user's voice information can be used to recognize the relations between the user's voice information and the preset voice information. This solves the problem of the incapability of the existing technologies to accurately recognize a target user. Target users can thus be accurately identified and be precisely matched with operation authorizations, which helps to avoid situations where some users operate beyond their real operation authorization. Interaction between users and the apparatus is thus improved.

An embodiment of the present disclosure provides a voice information processing method. Referring to Fig. 2, the method includes the following steps 201 to 206.

At step 201, a voice information processing device acquires first voice information.

At step 202, the voice information processing device acquires a first time-domain waveform corresponding to the first voice information.

Specifically, the first time-domain waveform corresponding to the first voice information is an unprocessed original waveform acquired of the first voice information.

At step 203, the voice information processing device determines whether the first time-domain waveform of the first voice information is continuous.

Specifically, it is determined whether the time-domain waveform of the first voice information, namely real-time voice information sent by the user, is continuous or not within a receiving time period. The time-domain waveform of the real-time voice information sent by the user is always continuous signals within the receiving time period, while recorded voice information is sampled and acquired by a digital apparatus, and therefore a corresponding time-domain waveform thereof is generally discontinuous within the receiving time period.

After it is determined at step 203 whether or not the first time-domain waveform of the first voice information is continuous, step 204 or steps 205-206 are selectively executed. If the first time-domain waveform of the first voice information is discontinuous, step 204 is executed. If the first time-domain waveform of the first voice information is continuous, steps 205-206 are executed.

At step 204, if the first time-domain waveform of the first voice information is discontinuous, the voice information processing device reacquires the first voice information.

Specifically, if the first time-domain waveform of the first voice information is discontinuous, it is indicated that the first voice information acquired at present is recorded voice information. In this case, the first voice information can be directly deleted, and voice information is reacquired to avoid wrong operation.

At step 205, if the first time-domain waveform of the first voice information is continuous, the voice information processing device analyzes and processes the first voice information to obtain first feature information and second feature information of the first voice information.

Specifically, if the first time-domain waveform of the first voice information is continuous, it is indicated that the first voice information is real-time voice information sent by the user. In this case, spectrum analysis may be performed on the first time-domain waveform of the first voice information to obtain a frequency-domain waveform of the first voice information, from which the first feature information of the first voice information such as timbre of voice, resonance, harmonic mode, etc. is acquired, and meanwhile, from the first time-domain waveform of the first voice information, the second feature information of the first voice information such as volume of the voice, speaking speed, etc. is acquired.

At step 206, the voice information processing device, based on the first feature information and the second feature information of the first voice information, determines relations between the first voice information and preset voice information, and determines, based on a determination result, whether to execute an operation corresponding to the first voice information.

Specifically, the preset voice information is at least one piece of user voice information that is recorded, sampled, and stored in advance in a local system of a smart apparatus or the cloud corresponding to the smart apparatus. During the process of recording and sampling the preset voice information in the local system, a high compression ratio may be adopted for the sampled document on the premise that the audio quality of the preset voice information is kept as high as possible, so that fees for users' using of the network can be reduced. Storage of the preset voice information in the cloud may be realized through using the smart apparatus to communicate with the cloud via a wireless network and then storing the preset voice information acquired in the local system into the cloud.

It shall be noted that for explanations to those steps or concepts of the present embodiment that are the same as those of other embodiments, one can refer to the descriptions of other embodiments, and they will not be described herein in detail.

The voice information processing method provided by the present embodiment is capable of acquiring the first voice information, then analyzing and processing the first voice information to obtain the first feature information and the second feature information of the first voice information, determining the relations between the first voice information and the preset voice information based on the first feature information and the second feature information of the first voice information, and finally determining, based on the determination result, whether to execute the operation corresponding to the first voice information. By way of this, during the process of recognizing a user's voice information, both the first feature information and the second feature information of the user's voice information can be used to recognize the relations between the user's voice information and the preset voice information. This solves the problem of the incapability of the existing technologies to accurately recognize a target user. Target users can thus be accurately identified and be precisely matched with operation authorizations, which helps to avoid situations where some users operate beyond their real operation authorization. Interaction between users and the apparatus is thus improved. Besides, it reduces the risk of damaging a user' life and property safety caused by a faulty operation resulted from the recognition of recorded voice information during the course of the voice recognition.

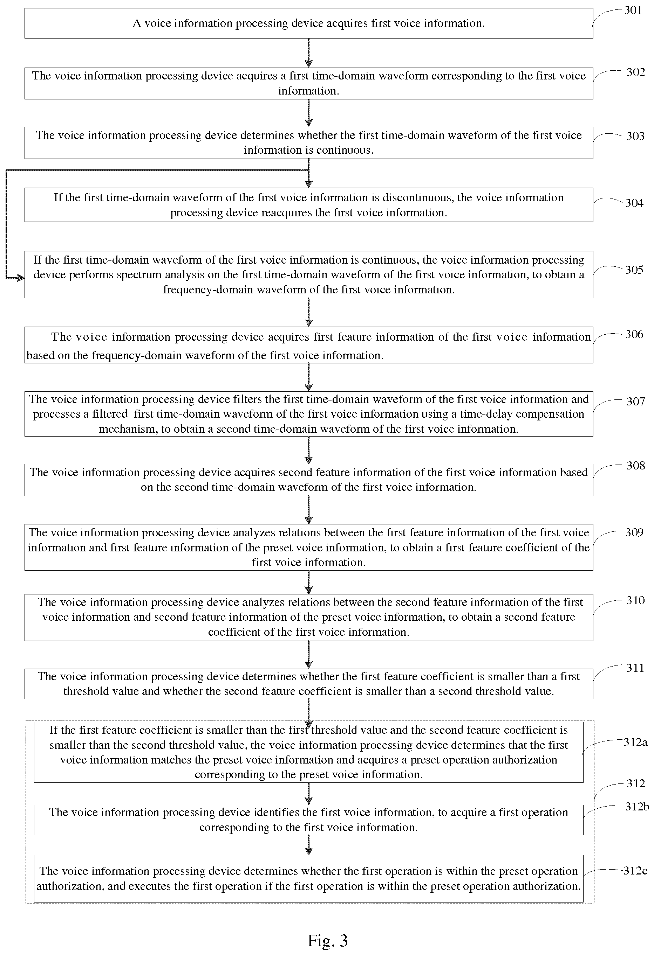

An embodiment of the present disclosure provides a voice information processing method. Referring to Fig. 3, the method includes the following steps 301 to 312.

At step 301, a voice information processing device acquires first voice information.

At step 302, the voice information processing device acquires a first time-domain waveform corresponding to the first voice information.

At step 303, the voice information processing device determines whether the first time-domain waveform of the first voice information is continuous.

After it is determined at step 303 whether or not the first time-domain waveform of the first voice information is continuous, step 304 or steps 305-312 are selectively executed. If the first time-domain waveform of the first voice information is discontinuous, step 304 is executed. If the first time-domain waveform of the first voice information is continuous, steps 305-312 are executed.

At step 304, if the first time-domain waveform of the first voice information is discontinuous, the voice information processing device reacquires the first voice information.

At step 305, if the first time-domain waveform of the first voice information is continuous, the voice information processing device performs spectrum analysis on the first time-domain waveform of the first voice information, to obtain a frequency-domain waveform of the first voice information.

Specifically, spectrum analysis may be performed on the first time-domain waveform of the first voice information using Fourier transform, to obtain the frequency-domain waveform of the first voice information.

At step 306, the voice information processing device acquires first feature information of the first voice information based on the frequency-domain waveform of the first voice information.

Specifically, a first feature analysis may be performed on the frequency-domain waveform of the first voice information, to obtain the first feature information of the first voice information. Specific methods for analyzing the frequency-domain waveform to obtain the first feature information can be found from the implementing methods in the existing technologies, and they will not be described herein in detail.

At step 307, the voice information processing device filters the first time-domain waveform of the first voice information and processes a filtered first time-domain waveform of the first voice information using a time-delay compensation mechanism, so as to obtain a second time-domain waveform of the first voice information.

Specifically, blank signals at the beginning and end of the first time-domain waveform of the first voice information may be filtered away, and then a filtered first time-domain waveform of the first voice information is processed using the time-delay compensation mechanism, to obtain the second time-domain waveform of first voice information. The second time-domain waveform is dynamically consistent with a time-domain waveform of preset voice information in waveform distributions, peak spacing and valley spacing, timestamps, etc.

At step 308, the voice information processing device acquires second feature information of the first voice information based on the second time-domain waveform of the first voice information.

Specifically, a second feature analysis may be performed on the second time-domain waveform of the first voice information, to obtain the second feature information of the first voice information. Specific methods for analyzing the time-domain waveform to obtain the second feature information can be found from the implementing methods in the existing technologies, and they will not be described herein in detail.

At step 309, the voice information processing device analyzes relations between the first feature information of the first voice information and first feature information of the preset voice information, to obtain a first feature coefficient of the first voice information.

Specifically, the first feature information of the first voice information and the first feature information of the preset voice information are subtracted from each other and an absolute value of a resulted difference therebetween is taken, to obtain the first feature coefficient of the first voice information. Of course, the method for analyzing the relations between the first feature information of the first voice information and the first feature information of the preset voice information may also be other methods adopted in the existing technologies, and is not limited to the implementing methods proposed herein in the present disclosure. The method for obtaining the first feature information of the preset voice information can be the same as the method for obtaining the first feature information of the first voice information.

At step 310, the voice information processing device analyzes relations between the second feature information of the first voice information and second feature information of the preset voice information, to obtain a second feature coefficient of the first voice information.

Specifically, the second feature information of the first voice information and the second feature information of the preset voice information are subtracted from each other and an absolute value of a resulted difference therebetween is taken, to obtain the second feature coefficient of the first voice information. Of course, the method for analyzing the relations between the second feature information of the first voice information and the second feature information of the preset voice information may also be other methods adopted in the existing technologies, and is not limited to the implementing methods proposed herein in the present disclosure. The method for obtaining the second feature information of the preset voice information can be the same as the method for obtaining the second feature information of the first voice information.

At step 311, the voice information processing device determines whether the first feature coefficient is smaller than a first threshold value and whether the second feature coefficient is smaller than a second threshold value.

Specifically, the first threshold value may be one numerical value set for all first feature coefficients, or may be different numerical values set for different first feature coefficients. For example, first threshold values of three first feature coefficients obtained based on the first feature information (timbre of the voice, resonance, harmonic mode) of the first voice information may be set to be a same numerical value, or a first threshold value of a first feature coefficient corresponding to the first feature information (timbre of the voice) of the first voice information may be set to be a first numerical value, a first threshold value of a first feature coefficient corresponding to the first feature information (resonance) may be set to be a second numerical value, and a first threshold value of a first feature coefficient corresponding to the first feature information (harmonic mode) may be set to be a third numerical value. The second threshold value may be one numerical value set for all second feature coefficients, or may be different numerical values set for different second feature coefficients. For example, second threshold values of two second feature coefficients obtained based on the second feature information (volume of the voice, speaking speed) of the first voice information may be set to be a same numerical value, or a second threshold value of a second feature coefficient corresponding to the second feature information (volume of the voice) of the first voice information may be set to be a fourth numerical value, and a second threshold value of a second feature coefficient corresponding to the second feature information (speaking speed) may be set to be a fifth numerical value. Users can set the first threshold value and the second threshold value according to real application scenarios and desired effects.

At step 312, if the first feature coefficient is smaller than the first threshold value and the second feature coefficient is smaller than the second threshold value, the voice information processing device determines that the first voice information matches the preset voice information and acquires a preset operation authorization corresponding to the preset voice information.

Specifically, if the first feature coefficient of the first voice information is larger than or equal to the first threshold value or the second feature coefficient is larger than or equal to the second threshold value, or, the first feature coefficient of the first voice information is larger than or equal to the first threshold value and the second feature coefficient is larger than or equal to the second threshold value, it is determined that the first voice information does not match the preset voice information and an operation corresponding to the first voice information is not executed. In use, after it is determined that the first feature coefficient is smaller than the first threshold value and the second feature coefficient is smaller than the second threshold value, a semantic meaning of the first voice information is matched with a semantic meaning of the preset voice information, to strengthen a verification procedure and ensure safety.

It shall be noted that step 312 may be implemented in the following ways.

At step 312a, if the first feature coefficient is smaller than the first threshold value and the second feature coefficient is smaller than the second threshold value, the voice information processing device determines that the first voice information matches the preset voice information and acquires the preset operation authorization corresponding to the preset voice information.

Specifically, the preset operation authorization may be scopes of different users' operations on a smart apparatus that are set based on functions of the smart apparatus. By doing this, the security coefficient of operations is improved. The preset operation authorization may be set and stored by users in advance in the smart apparatus.

At step 312b, the voice information processing device identifies the first voice information, to acquire a first operation corresponding to the first voice information.

Specifically, the semantic meaning of the first voice information may be recognized to acquire the first operation corresponding to the first voice information. The first operation may be an operation that the user wants the smart apparatus to execute. The method of implementing the semantic recognition can be found from the implementing methods in the existing technologies, and will not be described herein in detail.

At step 312c, the voice information processing device determines whether the first operation is within the preset operation authorization, and executes the first operation if the first operation is within the preset operation authorization.

Specifically, the step of determining whether the first operation is within the preset operation authorization may be realized by determining whether the operation corresponding to the first voice information is identical with an operation within the preset operation scope. If the operation corresponding to the first voice information is identical with at least one operation within the preset operation scope, the smart apparatus responds and executes the first operation.

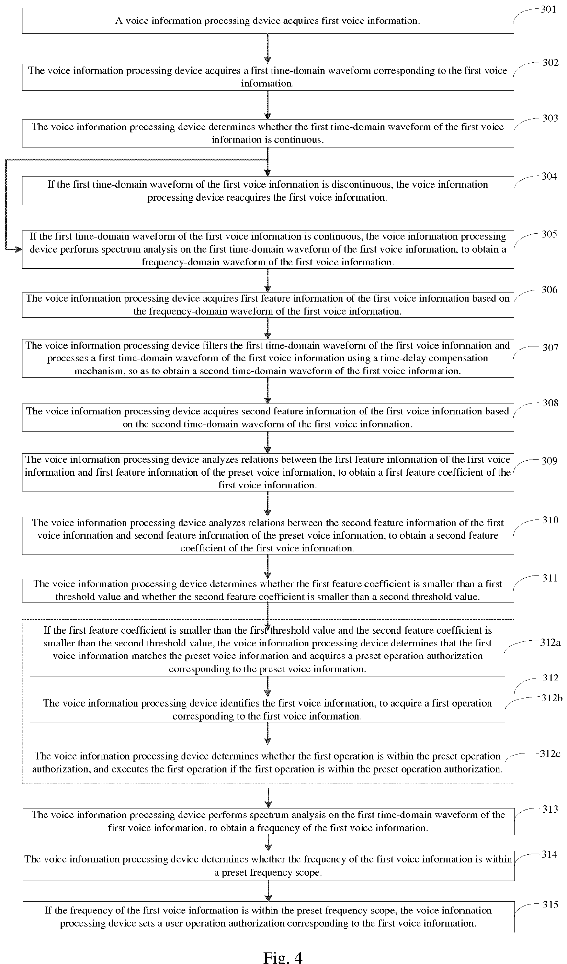

Based on the foregoing embodiments, in other embodiments of the present disclosure, the voice information processing method further includes the following steps 313 to 315, as shown in Fig. 4.

At step 313, the voice information processing device performs spectrum analysis on the first time-domain waveform of the first voice information, to obtain a frequency of the first voice information.

At step 314, the voice information processing device determines whether the frequency of the first voice information is within a preset frequency scope.

Specifically, the preset frequency can be set based on voice frequencies of users at different ages. In the present embodiment, the preset frequency scope can be set to be a voice frequency scope of minors. Male voice frequency is taken herein as an example for illustration. The male voice frequency is in a range of 174.614 Hz -184.997 Hz before voice mutation (minors), and is in a range of 87.307 Hz-92.499 Hz after voice mutation (adults).

At step 315, if the frequency of the first voice information is within the preset frequency scope, the voice information processing device sets a user operation authorization corresponding to the first voice information.

Specifically, if the frequency of the first voice information is within the preset frequency scope, it is indicated that a user who is sending the voice information is a minor, and it is necessary to limit functions of the smart apparatus to those that can be used by the minor. For example, the smart apparatus or some functions of the smart apparatus may be set to be unusable, for example, to cause a smart relay to stop supplying power to a power socket, or to set a pay channel of a smart TV or a game function of a smart apparatus to be unusable. When the frequency of the first voice information is within the preset frequency scope, an operation within a limited function scope of the first operation corresponding to the first voice is not executed. When the frequency of the first voice information is not within the preset frequency scope, relations between the first voice information and the preset voice information are determined, and a subsequent processing procedure is executed based on the relations between the first voice information and the preset voice information.

It shall be noted that, in other embodiments of the present disclosure, the preset frequency scope may also be a voice frequency scope of adults. If the frequency of the first voice information is not within the preset frequency scope, the voice information processing device sets the user operation authorization corresponding to the first voice information. The setting of the preset frequency scope can be conducted based on the user's specific needs and desire, or completed before the smart apparatus leaves a factory. In all the embodiments of the present disclosure, the first feature information may be physical feature information of the voice, and the first feature coefficient may be a physical feature coefficient corresponding to the physical feature information; and the second feature information may be behavior feature information of the voice, and the second feature coefficient may be a behavior feature coefficient corresponding to the behavior feature information.

It shall be noted that for explanations to those steps or concepts of the present embodiment that are the same as those of other embodiments, one can refer to the descriptions of other embodiments, and they will not be described herein in detail.

The voice information processing method provided by the present embodiment is capable of acquiring the first voice information, then analyzing and processing the first voice information to obtain the first feature information and the second feature information of the first voice information, determining the relations between the first voice information and the preset voice information based on the first feature information and the second feature information of the first voice information, and finally determining, based on the determination result, whether to execute the operation corresponding to the first voice information. By way of this, in the process of recognizing a user's voice information, both the first feature information and the second feature information of the user's voice information can be used to recognize the relations between the user's voice information and the preset voice information. This solves the problem of the incapability of the existing technologies to accurately recognizing a target user. Target users can thus be accurately identified and be precisely matched with operation authorizations, which help to avoid situations where some users operate beyond their real operation authorization. Interaction between users and the apparatus is thus improved. Besides, it reduces the risk of damaging a user' life and property safety caused by a faulty operation resulted from the recognition of recorded voice information during the process of the voice recognition.

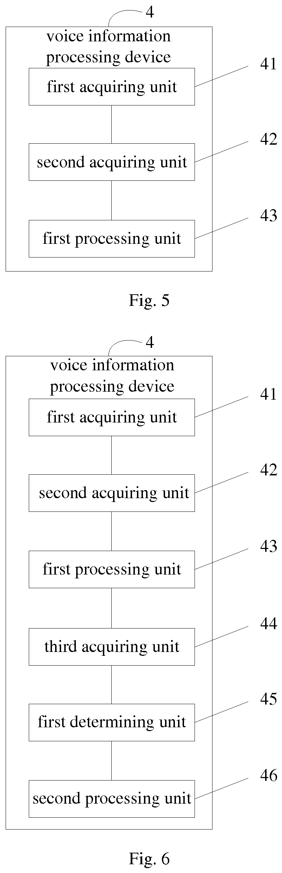

An embodiment of the present disclosure provides a voice information processing device 4, which can be used in the voice information processing methods provided by the embodiments shown in Figs. 1 to 4. Referring to Fig. 5, the device includes a first acquiring unit 41, a second acquiring unit 42, and a first processing unit 43.

The first acquiring unit is configured to acquire first voice information.

The second acquiring unit is configured to analyze and process the first voice information, so as to obtain first feature information and second feature information of the first voice information.

The first processing unit 43 is configured to determine relations between the first voice information and preset voice information based on the first feature information and the second feature information of the first voice information, and determine, based on a determination result, whether to execute an operation corresponding to the first voice information.

The voice information processing device provided by the present embodiment is capable of acquiring the first voice information, then analyzing and processing the first voice information to obtain the first feature information and the second feature information of the first voice information, determining the relations between the first voice information and the preset voice information based on the first feature information and the second feature information of the first voice information, and finally determining, based on the determination result, whether to execute the operation corresponding to the first voice information. By way of this, in the process of recognizing a user's voice information, both the first feature information and the second feature information of the user's voice information can be used to recognize the relations between the user's voice information and the preset voice information. This solves the problem of the incapability of the existing technologies to accurately recognize a target user. Target users can thus be accurately identified and be precisely matched with operation authorizations, which help to avoid situations where some users operate beyond their real operation authorization. Interaction between users and the apparatus is thus improved.

Specifically, referring to Fig. 6, the device further includes a third acquiring unit 44, a first determining unit 45, and a second processing unit 46.

The third acquiring unit 44 is configured to acquire a first time-domain waveform corresponding to the first voice information.

The first determining unit 45 is configured to determine whether the first time-domain waveform of the first voice information is continuous.

The second processing unit 46 is configured to analyze and process the first voice information if the first time-domain waveform of the first voice information is continuous, so as to obtain first feature information and second feature information of the first voice information.

The second processing unit 46 is further configured to reacquire the first voice information if the first time-domain waveform of the first voice information is discontinuous.

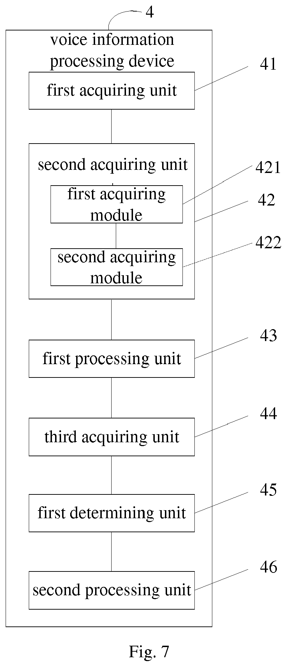

Specifically, referring to Fig. 7, the second acquiring unit 42 includes a first acquiring module 421 and a second acquiring module 422.

The first acquiring module 421 is configured to perform spectrum analysis on the first time-domain waveform of the first voice information, so as to acquire a frequency-domain waveform of the first voice information.

The first acquiring module 421 is further configured to acquire the first feature information of the first voice information based on the frequency-domain waveform of the first voice information.

The second acquiring module 422 is configured to filter the first time-domain waveform of the first voice information and process a filtered first time-domain waveform of the first voice information using a time-delay compensation mechanism, so as to obtain a second time-domain waveform of the first voice information.

The second acquiring module 422 is further configured to acquire the second feature information of the first voice information based on the second time-domain waveform of the first voice information.

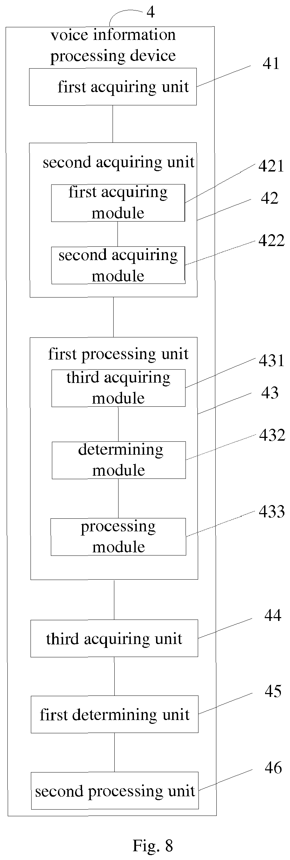

Specifically, as shown in Fig. 8, the first processing unit 43 includes: a third acquiring module 431, a determining module 432, and a processing module 433.

The third acquiring module 431 is configured to analyze relations between the first feature information of the first voice information and first feature information of the preset voice information, to obtain a first feature coefficient of the first voice information.

The third acquiring module 431 is further configured to analyze relations between the second feature information of the first voice information and second feature information of the preset voice information, to obtain a second feature coefficient of the first voice information.

The determining module 432 is configured to determine whether the first feature coefficient is smaller than a first threshold value and whether the second feature coefficient is smaller than a second threshold value.

The processing module 433 is configured to determine that the first voice information matches the preset voice information and execute an operation corresponding to the first voice information, if the first feature coefficient is smaller than the first threshold value and the second feature coefficient is smaller than the second threshold value.

In particular, alternatively, the processing module 433 is specifically configured to execute the following steps.

The processing module 433 matches the first voice information with the preset voice information and acquires a preset operation authorization corresponding to the preset voice information, if the first feature coefficient is smaller than the first threshold value and the second feature coefficient is smaller than the second threshold value.

The processing module 433 identifies the first voice information to acquire the first operation corresponding to the first voice information.

The processing module 433 determines whether the first operation is within the preset operation authorization, and executes the first operation if the first operation is within the preset operation authorization.

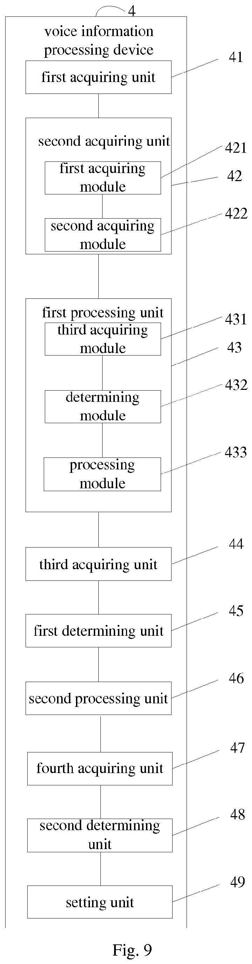

Specifically, as shown in Fig. 9, the device further includes a fourth acquiring unit 47, a second determining unit 48, and a setting unit 49.

The fourth acquiring unit 47 is configured to perform spectrum analysis on the first time-domain waveform of the first voice information, to obtain a frequency of the first voice information.

The second determining unit 48 is configured to determine whether the frequency of the first voice information is within a preset frequency scope.

The setting unit 49 is configured to set a user operation authorization corresponding to the first voice information, if the frequency of the first voice information is within the preset frequency scope.

It shall be noted that, for interaction procedures between various units and modules of the present embodiments, one can refer to the interaction procedures in the voice information processing methods provided in embodiments as shown in Figs. 1 to 4, and they will not be described herein in detail.

The voice information processing device provided by the present embodiment is capable of acquiring the first voice information, then analyzing and processing the first voice information to obtain the first feature information and the second feature information of the first voice information, determining the relations between the first voice information and the preset voice information based on the first feature information and the second feature information of the first voice information, and finally determining, based on the determination result, whether to execute the operation corresponding to the first voice information. By way of this, during the process of recognizing a user's voice information, both the first feature information and the second feature information of the user's voice information can be used to identify the relations between the user's voice information and the preset voice information. This solves the problem of the incapability of the existing technologies to accurately recognize a target user. Target users can thus be accurately identified and be precisely matched with operation authorizations, which help to avoid situations where some users operate beyond their real operation authorization. Interaction between users and the apparatus is thus improved. Besides, it reduces the risk of damaging a user' life and property safety caused by a faulty operation resulted from the recognition of recorded voice information during the process of the voice recognition.

In practical use, the first acquiring unit 41, the second acquiring unit 42, the first processing unit 43, the third acquiring unit 44, the first determining unit 45, the second processing unit 46, the fourth acquiring unit 47, the second determining unit 48, the setting unit 49, the first acquiring module 421, the second acquiring module 422, the third acquiring module 431, the determining module 432, and the processing module 433 can all be implemented by a central processing unit (CPU), a micro-processor unit (MPU), a digital signal processor (DSP), or a field programmable gate array (FPGA) located in a wireless data transmitting apparatus.

Those skilled persons in the art shall appreciate that the embodiments of the present disclosure can be provided as a method, a system, or a computer program product. The present disclosure can therefore adopt a hardware embodiment, a software embodiment, or an embodiment that combines software and hardware. Furthermore, the present disclosure may be used as a computer program product implemented on one or more computer usable memory media (including but not limited to disk memory, optical memory, etc.) containing computer usable program codes.

The present disclosure is described in combination with flowcharts and/or block diagrams of the methods, apparatuses (systems), and computer program products of the embodiments of the present disclosure. It shall be appreciated that computer program instructions can be sued to implement each step and/or block of the flowcharts and/or block diagrams, and combinations of the steps and/or blocks of the flowcharts and/or block diagrams. These computer program instructions can be applied to a general-purpose computer, a special-purpose computer, an embedded processor, or a processor of other programmable data processing apparatuses to form a machine, by way of which a device is produced for realizing a function defined by a step or multiple steps of the flowcharts and/or defined by a block or multiple blocks of the block diagrams by means of an instruction executed by a processor of a computer or a processor of other programmable data processing apparatuses.

These computer program instructions may also be stored in a computer readable memory capable of guiding a computer or other programmable data processing apparatuses to work in a particular way, so that the instruction stored in the computer readable memory can produce a product comprising an instruction device which realizes the function defined by a step or multiple steps of the flowcharts and/or defined by a block or multiple blocks of the block diagrams.

These computer program instructions may also be loaded onto a computer or other programmable data processing apparatuses, so that a series of operational steps can be executed on the computer or the programmable data processing apparatuses to generate the processing realized by the computer, so that the instruction executed on the computer or the programmable data processing apparatuses can provide steps for realizing the function defined by a step or multiple steps of the flowcharts and/or defined by a block or multiple blocks of the block diagrams.

The present disclosure relates to voice processing technologies in the technical field of communications, solves the problem of the incapability of the existing technologies to accurately recognize a target user based on voice information. Target users can thus be accurately identified and be precisely matched with operation authorizations, which help to avoid situations where some users operate beyond their real operation authorization. Interaction between users and the apparatus is thus improved.

The above descriptions are only preferred embodiments of the present disclosure, and are not intended for restricting the protection scope of the present disclosure.

## Claims

1. A voice information processing method, **characterized in that** the method comprises steps of:
acquiring first voice information;
analyzing and processing the first voice information, to obtain first feature information and second feature information of the first voice information; and
determining, based on the first feature information and the second feature information of the first voice information, relations between the first voice information and preset voice information, and determining, based on a determination result, whether to execute an operation corresponding to the first voice information.

2. The method according to claim 1, **characterized in that** before the step of analyzing and processing the first voice information to obtain the first feature information and the second feature information of the first voice information, the method further comprises steps of:
acquiring a first time-domain waveform corresponding to the first voice information;
determining whether the first time-domain waveform of the first voice information is continuous;
analyzing and processing the first voice information if the first time-domain waveform of the first voice information is continuous, to obtain the first feature information and the second feature information of the first voice information; and
reacquiring the first voice information if the first time-domain waveform of the first voice information is discontinuous.

3. The method according to claim 1 or 2, **characterized in that** the step of analyzing and processing the first voice information to obtain the first feature information and the second feature information of the first voice information comprises steps of:
performing spectrum analysis on a first time-domain waveform of the first voice information, to obtain a frequency-domain waveform of the first voice information;
acquiring the first feature information of the first voice information based on the frequency-domain waveform of the first voice information;
filtering the first time-domain waveform of the first voice information and processing a filtered first time-domain waveform of the first voice information using a time-delay compensation mechanism, to obtain a second time-domain waveform of the first voice information; and
acquiring the second feature information of the first voice information based on the second time-domain waveform of the first voice information.

4. The method according to claim 1, **characterized in that** the step of determining, based on the first feature information and the second feature information of the first voice information, the relations between the first voice information and the preset voice information, and determining, based on the determination result, whether to execute the operation corresponding to the first voice information, comprises steps of:
analyzing relations between the first feature information of the first voice information and first feature information of the preset voice information, to obtain a first feature coefficient of the first voice information;
analyzing relations between the second feature information of the first voice information and second feature information of the preset voice information, to obtain a second feature coefficient of the first voice information;
determining whether the first feature coefficient is smaller than a first threshold value and whether the second feature coefficient is smaller than a second threshold value; and
determining that the first voice information matches the preset voice information and executing the operation corresponding to the first voice information, if the first feature coefficient is smaller than the first threshold value and the second feature coefficient is smaller than the second threshold value.

5. The method according to claim 4, **characterized in that** the step of determining that the first voice information matches the preset voice information and executing the operation corresponding to the first voice information, if the first feature coefficient is smaller than the first threshold value and the second feature coefficient is smaller than the second threshold value, comprises steps of:
determining that the first voice information matches the preset voice information and acquiring a preset operation authorization corresponding to the preset voice information, if the first feature coefficient is smaller than the first threshold value and the second feature coefficient is smaller than the second threshold value;
identifying the first voice information, to acquire a first operation corresponding to the first voice information; and
determining whether the first operation is within the preset operation authorization, and executing the first operation if the first operation is within the preset operation authorization.

6. The method according to claim 1, **characterized in that** the method further comprises steps of:
performing spectrum analysis on a first time-domain waveform of the first voice information, to obtain a frequency of the first voice information;
determining whether the frequency of the first voice information is within a preset frequency scope; and
setting a user operation authorization corresponding to the first voice information, if the frequency of the first voice information is within the preset frequency scope.

7. A voice information processing device, **characterized in that** the device comprises: a first acquiring unit, a second acquiring unit, and a first processing unit, wherein:
the first acquiring unit is configured to acquire first voice information;
the second acquiring unit is configured to analyze and process the first voice information, to obtain first feature information and second feature information of the first voice information; and
the first processing unit is configured to determine, based on the first feature information and the second feature information of the first voice information, relations between the first voice information and preset voice information, and determine, based on a determination result, whether to execute an operation corresponding to the first voice information.

8. The device according to claim 7, **characterized in that** the device further comprises: a third acquiring unit, a first determining unit, and a second processing unit, wherein:
the third acquiring unit is configured to acquire a first time-domain waveform corresponding to the first voice information;
the first determining unit is configured to determine whether the first time-domain waveform of the first voice information is continuous;
the second processing unit is configured to analyze and process the first voice information if the first time-domain waveform of the first voice information is continuous, to obtain the first feature information and the second feature information of the first voice information; and
the second processing unit is further configured to reacquire the first voice information if the first time-domain waveform of the first voice information is discontinuous.

9. The device according to claim 7 or claim 8, **characterized in that** the second acquiring unit comprises: a first acquiring module and a second acquiring module, wherein:
the first acquiring module is configured to perform spectrum analysis on a first time-domain waveform of the first voice information, to acquire a frequency-domain waveform of the first voice information;
the first acquiring module is further configured to acquire the first feature information of the first voice information based on the frequency-domain waveform of the first voice information;
the second acquiring module is configured to filter the first time-domain waveform of the first voice information and process a filtered first time-domain waveform of the first voice information using a time-delay compensation mechanism, to obtain a second time-domain waveform of the first voice information; and
the second acquiring module is further configured to acquire the second feature information of the first voice information based on the second time-domain waveform of the first voice information.

10. The device according to claim 7, **characterized in that** the first processing unit comprises: a third acquiring module, a determining module, and a processing module, wherein:
the third acquiring module is configured to analyze relations between the first feature information of the first voice information and first feature information of the preset voice information, to obtain a first feature coefficient of the first voice information;
the third acquiring module is further configured to analyze relations between the second feature information of the first voice information and second feature information of the preset voice information, to obtain a second feature coefficient of the first voice information;
the determining module is configured to determine whether the first feature coefficient is smaller than a first threshold value and whether the second feature coefficient is smaller than a second threshold value; and
the processing module is configured to determine that the first voice information matches the preset voice information and execute the operation corresponding to the first voice information, if the first feature coefficient is smaller than the first threshold value and the second feature coefficient is smaller than the second threshold value.

11. The device according to claim 10, **characterized in that** the processing module is further configured to:
determine that the first voice information matches the preset voice information and acquire a preset operation authorization corresponding to the preset voice information, if the first feature coefficient is smaller than the first threshold value and the second feature coefficient is smaller than the second threshold value;
identify the first voice information, to acquire a first operation corresponding to the first voice information; and
determine whether the first operation is within the preset operation authorization, and execute the first operation if the first operation is within the preset operation authorization.

12. The device according to claim 7, **characterized in that** the device further comprises: a fourth acquiring unit, a second determining unit, and a setting unit, wherein:
the fourth acquiring unit is configured to perform spectrum analysis on a first time-domain waveform of the first voice information, to obtain a frequency of the first voice information;
the second determining unit is configured to determine whether the frequency of the first voice information is within a preset frequency scope; and
the setting unit is configured to set a user operation authorization corresponding to the first voice information, if the frequency of the first voice information is within the preset frequency scope.
